# EUROPÄISCHE PATENTSCHRIFT

(11) **EP 2 203 329 B1**
(45) Veröffentlichungstag und Bekanntmachung des Hinweises auf die Patenterteilung: **01.10.2014**
(21) Anmeldenummer: 08786381.7
(22) Anmeldetag: 24.07.2008
(51) Int. Cl.: B60Q 1/48, B62D 15/02

(54) **STEUEREINRICHTUNG FÜR EINE ANZEIGEEINRICHTUNG EINER EINPARKEINRICHTUNG UND VERFAHREN ZUR DARSTELLUNG**
CONTROL DEVICE FOR A DISPLAY DEVICE OF A PARKING DEVICE, AND REPRESENTATION METHOD
DISPOSITIF DE COMMANDE POUR LE DISPOSITIF D'AFFICHAGE D'UN DISPOSITIF DE STATIONNEMENT ET PROCÉDÉ D'AFFICHAGE

(30) Priorität: 24.09.2007 DE 102007045562
(43) Veröffentlichungstag der Anmeldung: 07.07.2010
(73) Patentinhaber: Robert Bosch GmbH, 70442 Stuttgart (DE)
(72) Erfinder: KRAUTTER, Wolfgang, 71229 Leonberg (DE); SCHERL, Michael, 74321 Bietigheim (DE); GUENTHER, Clemens, 76275 Ettlingen (DE); HAUG, Matthias, 70469 Stuttgart (DE)
(86) Internationale Anmeldenummer: PCT/EP2008/059689
(87) Internationale Veröffentlichungsnummer: WO 2009/040156

(56) Entgegenhaltungen:
- WO-A-2005/120932
- DE-A1- 10 354 661
- DE-A1-102005 036 732
- DE-A1-102006 051 977

## Beschreibung

### Stand der Technik

Die Erfindung geht aus von einer Steuereinrichtung für eine Anzeigeeinrichtung einer Einparkeinrichtung oder einem Verfahren zur Darstellung einer vorderen und/oder hinteren Parklückenbegrenzung. Aus der DE 103 54 661 A1 ist bereits eine Vorrichtung zur semiautonomen Unterstützung eines Einparkvorgangs bei Fahrzeugen bekannt. Bei einem Vorbeifahren an einer Parklücke wird die Größe einer Parklücke ermittelt. Einem Fahrzeuglenker werden daraufhin Informationen und/oder Anweisungen über einen Einparkvorgang mitgeteilt, wobei eine Recheneinheit anhand der ermittelten Größe der Parklücke eine Einparkbahn in die Parklücke vorgibt. Ist das Fahrzeug zumindest teilweise auf Grund der vorgegebenen Einparkbahn in die Parklücke eingefahren, so wird eine Ausrichtung des Fahrzeugs in Bezug auf die Parklücke und der Rangierabstand vor und hinter dem Fahrzeug erneut bestimmt, um gegebenenfalls eine korrigierte, weitere Einparkbahn zu bestimmen.

### Offenbarung der Erfindung

### Vorteile der Erfindung

Die erfindungsgemäße Steuereinrichtung mit den Merkmalen des unabhängigen Anspruchs hat demgegenüber den Vorteil, dass ein Fahrer darüber informiert wird, auf welche Weise die vordere bzw. die hintere Parklückenbegrenzung bestimmt worden ist. Fährt das Fahrzeug an der Parklücke vorbei, so hat das Fahrzeug im Allgemeinen eine im Straßenverkehr zumindest in Wohngebieten oder in Parkplätzen übliche Geschwindigkeit inne. Infolge der Fahrzeugbewegung kommt es gegebenenfalls zu Ungenauigkeiten bei der Vermessung der Parklücke. Insbesondere ist es bei der Vorbeifahrt schwierig, genau eine Position der vorderen und der hinteren Begrenzung exakt zu bestimmen. Neben der Geschwindigkeit ist hierbei der in Bezug zu der vorderen und hinteren Parklückenbegrenzung ungefähr seitlich verlaufende Einstrahlwinkel von Messstrahlen zu berücksichtigen. Steht nun insbesondere nach dem Beginn des Einparkverfahrens ein weiteres Messsystem zur Verfügung, so kann der Ort einer vorderen bzw. einer hinteren Parklückenbegrenzung genauer bestimmt werden. Gegebenenfalls stehen mehr Messsensoren oder mehr Messzeit zur Verfügung. Ferner wird das Fahrzeug während des Einparkvorgangs im Allgemeinen langsamer bewegt. Wird der Fahrer darüber informiert, mit welchem Messsystem eine Erfassung der Parklückenbegrenzung erfolgt ist, kann der Fahrer unmittelbar erkennen, wie zuverlässig die Erkennung der Parklückenbegrenzung ist. Steht ein genaues Messergebnis zur Verfügung, so kann sich der Fahrer bei dem Einparkvorgang sicherer fühlen. Steht kein genaueres Messsystem zur Verfügung, beispielsweise auf Grund einer schwierigen Messsituation oder auf Grund einer Störung eines der Messsysteme, so kann der Fahrer auch dies erkennen und selbst eine höhere Sorgfalt bei der Durchführung des Einparkvorgangs aufwenden. Steht ein automatisches Einparksystem zur Verfügung, kann der Fahrer in diesem Fall gegebenenfalls ergänzend zu der automatischen Steuerung ein Einparken in die Parklücke aufmerksam überwachen.

Durch die in den abhängigen Ansprüchen aufgeführten Maßnahmen sind vorteilhafte Weiterbildungen und Verbesserungen der in dem unabhängigen Anspruch angegebenen Steuereinrichtung möglich. So ist es vorteilhaft, die Abmaße der Parklücke in einer Vogelperspektive darzustellen, da auf diese Weise die Abmaße der Parklücke für einen Fahrer leicht und intuitiv erfassbar sind.

Ferner ist es vorteilhaft, eine Steuereinrichtung zur Berechnung einer Fahrstrecke zu einer Zielposition innerhalb der Parklücke auszulegen. Hierdurch ist es einerseits möglich, einem Fahrer nicht nur eine Information über die Abmaße der Parklücke zu geben, sondern ihn zusätzlich auch in die Parklücke hinein zu lotsen. Dies kann einerseits durch die Ausgabe von Anweisungen, andererseits aber auch durch einen automatischen Eingriff in den Triebstrang und/oder die Lenkung des Fahrzeugs durchgeführt werden, so dass das Fahrzeug durch Steuerung der Bremse, des Antriebs und/oder der Lenkung teilweise automatisch oder vollautomatisch in die Parklücke geführt wird.

Um einen Eindruck von einem zuverlässig arbeitenden System noch weiter zu erhöhen, ist vorteilhaft eine Darstellung einer Zielposition des Fahrzeugs in der Anzeige vorgesehen.

Für eine zusätzliche Sicherheit des Fahrers ist vorteilhaft eine Warneinrichtung vorgesehen, die den Fahrer bei einem Unterschreiten eines Abstandes zu einer vorderen und/oder hinteren Parklückenbegrenzung warnt.

Entsprechende Vorteile ergeben sich für das erfindungsgemäße Verfahren zur Darstellung einer vorderen und/oder einer hinteren Parklückenbegrenzung. Eine besonders vorteilhaft und intuitiv erkennbare Darstellung ergibt sich dann, wenn eine Parklückenbegrenzung als eine Linie dargestellt wird, deren Dicke und/oder Farbe in Abhängigkeit davon gewählt wird, mit welchem Messsystem bzw. mit welchen Messsystemen die vordere bzw. hintere Parklückengrenze detektiert wurde. Gegebenenfalls können in einer Ausführungsform zudem Fehlerbalken bei der Erfassung derart mit berücksichtigt werden, dass die Größe der Fehlerbalken einen Einfluss auf die Linienbreite in der Darstellung der Parklückenbegrenzungen haben.

### Kurze Beschreibung der Zeichnungen

Ausführungsbeispiele der Erfindung sind in den Zeichnungen dargestellt und in der nachfolgenden Beschreibung näher erläutert.

Es zeigen:
Figur 1 eine schematische Darstellung eines Fahrzeugs mit einer erfindungsgemäßen Steuereinrichtung,
Figur 2 ein Ausführungsbeispiel für eine Fahrstrecke eines Fahrzeugs von einer Ausgangsposition in eine Zielposition einer Parklücke unter Ausnutzung des erfindungsgemäßen Verfahrens,
Figur 3 bis 5 einen Ablauf eines erfindungsgemäßen Verfahrens zur Darstellung einer vorderen und/oder einer hinteren Parklückenbegrenzung bei einem Einparken eines Fahrzeugs in eine seitlich zum Straßenverlauf angeordnete Parklücke.

### Ausführungsformen der Erfindung

Die erfindungsgemäße Steuereinrichtung ist vorzugsweise in Kraftfahrzeugen einsetzbar, die im Straßenverkehr bewegt werden und die in eine Parklücke mit einer Unterstützung eingeparkt werden sollen. Das erfindungsgemäße Verfahren ist sowohl für quer zum Straßenverlauf angeordnete Parklücken, aber insbesondere auch für parallel zum Straßenverlauf angeordnete Parklücken geeignet, bei denen sich das Einparken gegenüber dem Einparken in Querparklücken im Allgemeinen als schwerer erweist.

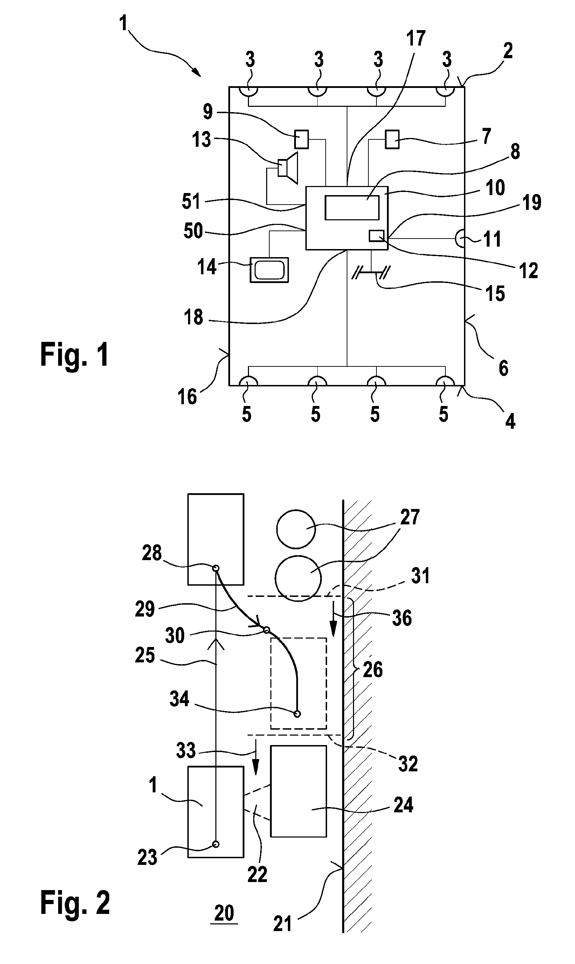

In der Figur 1 ist ein Kraftfahrzeug 1 gezeigt, das schematisch dargestellt ist. An einer Vorderseite 2 des Kraftfahrzeugs 1 sind Abstandssensoren 3 angeordnet, die dazu ausgelegt sind, einen Abstand zu einem Hindernis zu messen. Die Abstandssensoren 3 sind beispielsweise als Radarsensoren oder als optische Sensoren ausgeführt. Insbesondere sind die Abstandssensoren 3 jedoch als Ultraschallsensoren ausgeführt, die ein Schallsignal aussenden, ein reflektiertes Schallsignal wieder empfangen und aus der Laufzeit des Schallsignals unter Berücksichtigung der Schallgeschwindigkeit eine Abstandsbestimmung zu einem Hindernis vor dem Fahrzeug 1 ermöglichen. Die Abstandssensoren 3 werden von einer Steuereinrichtung 10 über eine Schnittstelle 17 ausgewertet. Ferner sind an die Steuereinrichtung 10 auch an einer Rückseite 4 des Fahrzeugs angeordnete Abstandssensoren 5 über eine Schnittstelle 18 angeschlossen, die vorzugsweise auf gleiche Weise wie die Abstandssensoren 3 entsprechend einen Abstand zu einem hinter dem Fahrzeug 1 angeordneten Hindernis erfassen können.

Ferner ist die Steuereinrichtung 10 über eine Schnittstelle 19 mit einem seitlich ausgerichteten Abstandssensor 11 verbunden, der den Abstand zu Hindernissen an einer rechten Fahrzeugseite 6 vermisst. Die Abstandsdaten werden mit einer zurückgelegten Wegstrecke des Fahrzeugs korreliert, die über einen Wegsensor 7 erfasst wird. Somit können Hindernisse, die an der rechten Fahrzeugseite 6 neben dem Fahrzeug angeordnet sind, unter Berücksichtigung der zurückgelegten Wegstrecke derart korreliert werden, dass ein Umgebungsbild des Fahrzeugs an der rechten Fahrzeugseite 6 in Bezug zu einer aktuellen Position des Fahrzeugs 1 ermittelt wird. Für die Ermittlung des Umgebungsbildes weist die Steuereinrichtung 10 eine Recheneinheit 8 auf. In einer Ausführungsform kann zusätzlich der Lenkwinkel des Fahrzeugs über einen Lenkwinkelsensor 9 erfasst werden, so dass neben der zurückgelegten Wegstrecke auch der eingeschlagene Lenkwinkel des Fahrzeugs berücksichtigt werden kann.

In dem Ausführungsbeispiel gemäß der Figur 1 ist die Verwendung von einem seitlichen Abstandssensor 11 gezeigt. Es können jedoch auch mehrere Abstandssensoren an der rechten Fahrzeugseite 6 angeordnet sein. Entsprechend ist es auch möglich, ergänzend oder alternativ Abstandssensoren an der linken Fahrzeugseite 16 vorzusehen.

Die Abstandssensoren 3, 5, 11 können jeweils systematisch als prinzipiell gleiches Messsystem ausgebildet sein. Da jedoch die Messung unterschiedlichen Anwendungszwecken dient - bei der seitlichen Vermessung einer schnelle Erfassung der Parklückenkonturen und bei der Vermessung an der vorderen und der hinteren Fahrzeugseite 2, 4 insbesondere einer genauen Erfassung des Abstandes - können sowohl unterschiedliche Messprogramme, aber auch unterschiedliche Messtechniken, beispielsweise Radar- sowie Ultraschallmessung, verwendet werden.

Die Steuereinrichtung 10 überprüft eine mögliche Parklücke in der Fahrzeugumgebung durch einen Vergleich mit in einer Speichereinrichtung 12 abgelegten Fahrzeugdaten des Fahrzeugs 1 dahingehend, ob die Parklücke für ein Einparken mit dem Fahrzeug 1 geeignet ist. Hierzu werden die Längen- und Breitenabmaße mit den erfassten Abmaßen der Parklücke verglichen. Ist die Parklücke geeignet, so werden über einen Lautsprecher 13 und/oder über eine Anzeige 14 an den Fahrer des Fahrzeugs Fahrhinweise ausgegeben, bei deren Befolgen der Fahrer das Fahrzeug 1 von seiner aktuellen Position in die ermittelte Parklücke steuern kann. Die Anzeige 14 ist über eine Schnittstelle 50 und der Lautsprecher 13 ist über eine Schnittstelle 51 an die Steuereinrichtung 10 angeschlossen. Nähert sich der Fahrer mit dem Fahrzeug 1 einer Parklückenbegrenzung an, so kann über den Lautsprecher 13 und/oder die Anzeige 14 eine Warnung an den Fahrer ausgegeben werden.

In einer weiteren Ausführungsform können jedoch auch Steuerungsinformation von der Steuereinrichtung 10 vorzugsweise über einen Datenbus 15 an Steuereinrichtungen im Fahrzeug ausgegeben werden, um das Fahrzeug zumindest teilweise automatisch oder vollautomatisch in die Parklücke zu führen. So kann ein Beschleunigen, ein Abbremsen und/oder ein Lenken des Fahrzeugs mittels einer Steuerung durch die Steuereinrichtung 10 vorzugsweise über den Datenbus 15 automatisch erfolgen.

Um den Fahrer über das von ihm durchzuführende Fahren bzw. über ein zumindest teilweise automatisches Fahren des Fahrzeugs in die Parklücke zu informieren, werden die Abmaße der Parklücke in der Anzeige 14 zumindest schematisch dargestellt. Hierbei sind beispielsweise eine Darstellung in Vogelperspektive, in Aufsicht oder in einer Schrägansicht auf die Fahrzeugsituation möglich. Insbesondere wird hierbei die Position des Fahrzeugs in der Parklücke, in einer weiteren Ausführungsform auch eine Zielposition des Fahrzeugs, zusätzlich zu einer beispielsweise schematischen Darstellung der Abmaße der Parklücke mit in einer Anzeige 14 dargestellt.

Auf welche Weise die Parklücke in der Anzeige 14 gezeigt wird, wird von der Recheneinheit 8 festgelegt. In erfindungsgemäßer Weise unterscheidet sich die Darstellung der Begrenzung der Parklücke dahingehend, ob Abstandswerte zur Bestimmung der Abmaße der Parklücke nur über den Abstandssensor 11 erfasst wurden oder ob zusätzlich auch Abstandsdaten der Abstandssensoren 3 und/oder 5 zur Verfügung stehen, um eine Begrenzung der Parklücke zu lokalisieren.

Anhand der Figur 2 wird ein Einparkverfahren erläutert, bei dem das Fahrzeug 1 mit der erfindungsgemäßen Steuereinrichtung 10 in die Parklücke hinein fährt. In der Figur 2 ist das Fahrzeug 1 dargestellt, das in einer Straße 20 parallel zu einem Straßenrand 21 fährt. Der seitliche Abstandssensor 11 ist aktiviert und sendet in einem Messfeld 22 ein Signal aus, das an der ersten Position 23 des Fahrzeugs, die durch die Mitte der Hinterachse dargestellt ist, in Richtung eines in der Straße geparkten weiteren Fahrzeugs 24 abgestrahlt wird. Das Fahrzeug 1 fährt nun entlang der Fahrstrecke 25 die Straße 20 entlang. Das Messfeld 22 trifft in einem freien Bereich 26 auf kein Hindernis bis zu der seitlichen Straßenbegrenzung 21, beispielsweise einer Bordsteinkante. Weiter vorne treffen die Signale des Messfeldes auf Blumenkübel 27, die den freien Bereich 26 nach vorne begrenzen.

Infolge der Vorbeifahrtgeschwindigkeit des Fahrzeugs und des seitlichen Messwinkels kommt es im vorliegenden Fall nun zu leichten Ungenauigkeiten bei der Bestimmung der Position einer vorderen Begrenzung 31 und einer hinteren Begrenzung 32 des freien Bereichs 26. Die vordere Begrenzung 31 ragt in den Blumenkübel 27 leicht hinein. Die hintere Begrenzung 32 weist einen verhältnismäßig großen Abstand zu dem Fahrzeug 24 auf. Da die Parklücke mit dem freien Bereich 26 dennoch als ausreichend groß angesehen wird, wird das Fahrzeug an der zweiten Position 28 angehalten und der Fahrer wird aufgefordert, nach rechts einzuschlagen. Alternativ erfolgt der Lenkeinschlag automatisch.

Der Fahrer fährt nun entlang der Fahrstrecke 29 das Fahrzeug rückwärts in die Parklücke hinein. Ist das Fahrzeug weit genug in die Parklücke hinein gefahren, beispielsweise ab der dritten Position 30, besteht die Möglichkeit, die hintere Begrenzung 32 der Parklücke über die rückwärtigen Abstandssensoren 5 des Fahrzeugs 1 zu erfassen. Wurde die hintere Begrenzung 32 erfasst, wo wird die Darstellung der hinteren Begrenzung in der Anzeige gegenüber einer vorherigen Darstellung verändert, bei der nur eine Erfassung der Parklücke mit wenigstens einem seitlichen Sensor am Fahrzeug vorlag. So wird beispielsweise eine Liniendarstellung verändert oder es wird bei einer gegenüber einem Hindernis lediglich andersfarbigen Darstellung des freien Bereichs der Parklücke gegenüber einem Hindernis eine Linie zur Positionsbezeichnung der hinteren Parklückenbegrenzung in die Darstellung eingefügt. Sollte die neue Position nicht mit der zuvor erfassten Position übereinstimmen, so wird vorzugsweise bei der geänderten Darstellung der hinteren Parklückenbegrenzung in der Anzeige die neu ermittelte Position berücksichtigt. Im vorliegenden Ausführungsbeispiel erfolgt eine Korrektur der Position der Darstellung der hinteren Parklückenbegrenzung in Pfeilrichtung 33.

Ist das Fahrzeug weiter in die Parklücke hinein gefahren, so kann über die vorderen Abstandssensoren 3 an dem Fahrzeug 1 auch die vordere Begrenzung 31 der Parklücke nachgemessen werden. Entsprechend erfolgt auch hierbei eine geänderte Darstellung der Position der vorderen Parklückenbegrenzung gegenüber einer Darstellung für den Fall, dass nur eine Erfassung über den Sensor 11 vorliegt. Hat das Fahrzeug die vierte Position 34 erreicht, so kann dem Fahrer auch eine korrigierte Position der vorderen Parklückenbegrenzung 31 dargestellt werden, die in Pfeilrichtung 36 entsprechend korrigiert wird.

Nun kann der Fahrer entscheiden, ob er noch eine Feinkorrektur innerhalb der tatsächlich ihm nun genau angezeigten Parklücke durchführen möchte oder nicht. Er kann dabei in der Darstellung erkennen, dass nunmehr nicht nur die über den Abstandssensor 11 ermittelten Parklückenabmaße zur Verfügung stehen, sondern dass nunmehr genaue Ergebnisse bereitstehen, die über die vorderen Abstandssensoren 3 bzw. die hinteren Abstandssensoren 5 ermittelt wurden.

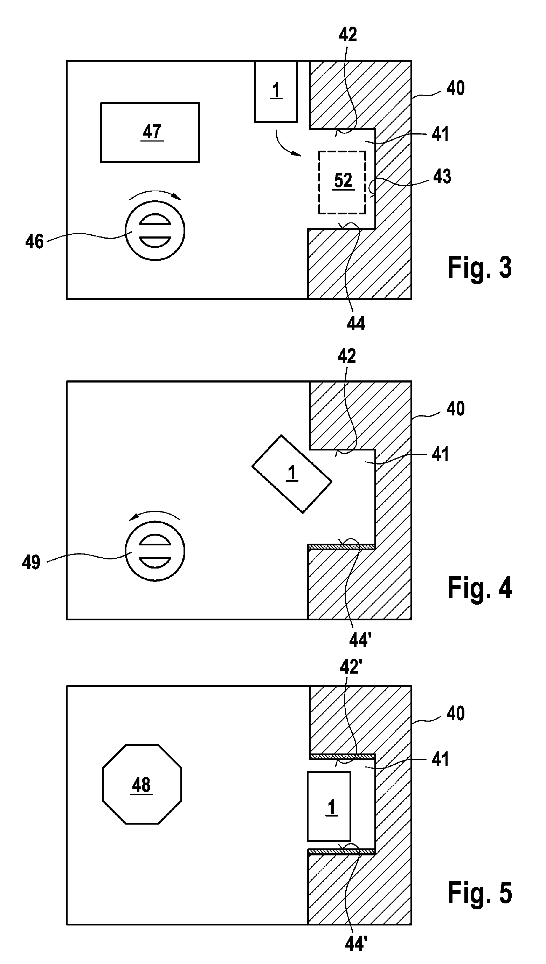

In den Figuren 3 bis 5 sind Beispiele für Darstellungen in der Anzeige 14 zur Anzeige der Abmaße der Parklücke dargestellt. In der Figur 3 ist eine Anzeigefläche 40 der Anzeige 14 dargestellt. Es ist das Fahrzeug 1 in Bezug zu einer schematisch dargestellten Parklücke 41 gezeigt. Die Parklücke 41 wird durch eine vordere Parklückenbegrenzung 42, eine seitliche Parklückenbegrenzung 43 und eine hintere Parklückenbegrenzung 44 begrenzt. Die dargestellten Positionen der Parklückenbegrenzungen basieren auf den Messungen bei der Vorbeifahrt des Fahrzeugs 1 und sind daher jeweils als eine dünne Linie dargestellt. Ferner ist es auch möglich, den befahrbaren Bereich in diesem Fall lediglich farblich unterschiedlich zu einem nicht befahrbaren Bereich darzustellen. Dies ist in der Figur 3 durch die Schraffierung des nicht befahrbaren Bereichs angedeutet. In einer weiteren Ausgestaltung kann zudem eine Fahrtrichtung des Fahrzeugs 1 durch eine Pfeildarstellung 45 angedeutet werden. Ferner ist es in einer weiteren Ausführungsform auch möglich, alternativ oder ergänzend ein Lenkradsymbol 46 mit Angabe einer Pfeilrichtung für den Lenkradeinschlag darzustellen. Weitere Informationen können beispielsweise in einem Textfenster 47 dargestellt werden. Die Fahrtrichtungen können auch bei einem automatischen System dargestellt werden, damit der Fahrer erkennt, in welche Richtung das Lenkrad automatisch gedreht wird. Gegebenenfalls kann auch der Hinweis an den Fahrer ausgegeben werden, nicht in das Lenkrad einzugreifen.

In einer Ausführungsform ist es auch möglich, eine Zielposition 52 des Fahrzeugs in der Anzeigefläche 40 darzustellen. Die Zielposition 52 ist in der Figur 3 gestrichelt eingetragen.

In der Figur 4 ist die Anzeige an der dritten Position 30 entsprechend dem in der Figur 2 erläuterten Ablauf dargestellt. Das Fahrzeug 1 ist nun teilweise in die Parklücke 41 hinein gefahren. Das Fahrzeug weist an der dritten Position einen derartigen Winkel und einen derartigen Abstand zu der rückwärtigen Parklückenbegrenzung auf, dass auch die rückwärtigen Abstandssensoren nunmehr eine Abstandsmessung durchführen können. Gegebenenfalls wird nunmehr eine Position der rückwärtigen Parklückenbegrenzung in der Anzeige 40 in Bezug zu dem Fahrzeug 1 korrigiert. Insbesondere wird aber die rückwärtige Parklückenbegrenzung nunmehr als Begrenzung 44' anders dargestellt, als die Begrenzung 44 in der Figur 3. Ein Fahrer kann nunmehr aufgrund der geänderten Darstellung erkennen, dass nicht nur eine Messung über den seitlichen Abstandssensor 11 erfolgt ist, wie es aus der Figur 3 ersichtlich ist, sondern entsprechend der anderen Darstellung der hinteren Parklückenbegrenzung gemäß der Figur 4, dass nunmehr zusätzlich durch die rückwärtigen Abstandssensoren eine Überprüfung der Position der rückwärtigen Parklückenbegrenzung stattgefunden hat. In einer ergänzenden Ausführungsform kann zudem ein Lenkradsymbol 49 dargestellt werden, das dem Fahrer nunmehr einen Einschlag nach links anzeigt.

Ist das Fahrzeug 1 nunmehr an die vierte Position 34 in die Parklücke 41 gefahren, so kann auch die vordere Parklückenbegrenzung durch die vorderen Abstandssensoren 3 des Fahrzeugs 1 erfasst werden. Dies ist in der Darstellung der Anzeigefläche 40 in der Figur 5 gezeigt. Entsprechend wird auch für die vordere Parklückenbegrenzung eine geänderte Darstellung durch ein anderes Symbol 42' vorgenommen. Der Fahrer kann nunmehr erkennen, dass sowohl die vordere, als auch die hintere Parklückenbegrenzung nunmehr durch die weiteren Messsysteme der Abstandssensoren 3 bzw. 5 erfasst werden konnten. In einer ergänzenden Ausführungsform kann zudem bei Erreichen der vierten Position 34 ein Stoppsignal 48 in der Anzeigefläche 40 dargestellt werden. Der Fahrer weiß nun, dass er sein Fahrzeug entsprechend in der Parklücke 41 stehen lassen kann.

Weist das Fahrzeug nur an einer Vorderseite bzw. nur an einer Rückseite Abstandssensoren zusätzlich zu einem seitlichen Sensor auf, so kann eine entsprechende geänderte Darstellung auf die jeweilige Seite, an der ein zusätzliches Abstandsmesssystem angeordnet ist, beschränkt werden. Die andere Seite der Parklückenbegrenzung bleibt dann entsprechend ungeändert.

In einer weiteren Ausführungsform kann eine Parklückenbegrenzung, die nur mit einem Messsystem erfasst wurde, beispielsweise in einer Warnfarbe dargestellt werden. Ist die Parklückenbegrenzung von einem weiteren System erfasst worden, so wechselt die Farbdarstellung von einer Warnfarbe zu einer Nicht-Warnfarbe, beispielsweise von rot nach grün. Ferner ist es auch möglich, dass sich die Liniendicke der Parklückenbegrenzung alleine ändert, beispielsweise von einer dünnen zu einer dicken Linie. In einer Ausführungsform kann ein Fehlerbalken auf Basis der verschiedenen Messungen für die Position einer Parklückenbegrenzung von der Steuereinrichtung 10 bestimmt werden. Die Breite der dargestellten Linie kann dann zudem von der Größe des berechneten Fehlerbalkens abhängig gewählt werden. Ferner ist es auch möglich, in einer anderen Ausführungsform von einem kontinuierlichen Farbverlauf zwischen einer Parklückenumgebung und der Parklücke bei einer Erfassung der Parklücke durch ein erstes Messsystem zu einer Darstellung zu einem harten Farbwechsel überzugehen, falls eine Erfassung ergänzend oder alternativ durch ein zweites Messsystem erfolgt ist.

## Patentansprüche

1. Steuereinrichtung (10) für eine Anzeigeeinrichtung (14) einer Einparkeinrichtung mit einer Schnittstelle (19) zu einer ersten Erfassungseinrichtung (11) zum Erfassen einer Parklücke (41) bei einer seitlichen Vorbeifahrt an der Parklücke (41), mit einer Schnittstelle (17, 18) zu einer zweiten Erfassungseinrichtung (3, 5) zum Erfassen einer vorderen und/oder hinteren Begrenzung der Parklücke (41) bei einem Einfahren in die Parklücke und mit einer Schnittstelle (50) zu der Anzeigeeinrichtung (14) zur Darstellung der Abmaße der Parklücke (41) in der Anzeigeeinrichtung (14), **dadurch gekennzeichnet dass** sich eine Darstellung einer vorderen (42) und/oder einer hinteren (44) Begrenzung der Parklücke (41), die nur von der ersten Erfassungseinrichtung (11) erfasst wurde, von einer Darstellung einer vorderen (42') und/oder einer hinteren (44') Begrenzung der Parklücke (41) unterscheidet, die von der zweiten Erfassungseinrichtung (3, 5) erfasst wurde.

2. Steuereinrichtung nach Anspruch 1, **dadurch gekennzeichnet, dass** die Anzeigeeinrichtung (14) derart angesteuert wird, dass die Abmaße der Parklücke in einer Vogelperspektive dargestellt werden.

3. Steuereinrichtung nach einem der vorhergehenden Ansprüche, **dadurch gekennzeichnet, dass** die Steuereinrichtung (10) zur Berechnung einer Fahrstrecke von einer aktuellen Fahrzeugposition zu einer Zielposition des Fahrzeugs innerhalb der Parklücke ausgelegt ist.

4. Steuereinrichtung nach Anspruch 3, **dadurch gekennzeichnet, dass** die Steuereinrichtung (10) dazu ausgelegt ist, in der Anzeigeinrichtung (14) eine Darstellung der Zielposition (52) zu veranlassen.

5. Steuereinrichtung nach einem der vorhergehenden Ansprüche, **gekennzeichnet durch** eine Schnittstelle (50, 51) zu einer Warneinrichtung (13, 14) zur Ausgabe einer Warnung bei einem Unterschreiten eines Abstands zu der vorderen und/oder der hinteren Parklückenbegrenzung.

6. Verfahren zur Darstellung einer vorderen und/oder hinteren Parklückenbegrenzung, wobei Abmaße der Parklücke mit einem ersten Messverfahren bei einer Vorbeifahrt eines Fahrzeugs an der Parklücke erfasst werden, wobei Abmaße der Parklücke in einem zweiten Messverfahren nach einem zumindest teilweisen Einfahren des Fahrzeugs in die Parklücke erfasst werden, **dadurch gekennzeichnet dass** die vordere und/oder die hintere Parklückenbegrenzung bei einem Erfassen der vorderen bzw. der hintere Parklückenbegrenzung nur durch das erste Messverfahren unterschiedlich gegenüber demjenigen Fall dargestellt werden, in dem die vordere bzw. die hintere Parklückenbegrenzung durch das zweite Messverfahren erfasst wird.

7. Verfahren nach Anspruch 6, **dadurch gekennzeichnet, dass** die vorderen und/oder die hintere Parklückenbegrenzung in der Weise unterschiedlich dargestellt werden, dass sich Linien zur Darstellung einer Parklückenbegrenzung in ihrer Dicke und/oder in ihrer Farbe jeweils unterscheiden.

## Claims

1. Control device (10) for a display device (14) of a parking device having an interface (19) with a first detection device (11) for detecting a parking space (41) while driving laterally past the parking space (41), having an interface (17, 18) with a second detection device (3, 5) for detecting a front and/or rear boundary of the parking space (41) when driving into the parking space, and having a interface (50) with the display device (14) for representing the dimensions of the parking space (41) on the display device (14), **characterized in that**
a representation of a front boundary (42) and/or a rear boundary (44) of the parking space (41), which has been detected only by the first detection device (11), differs from a representation of a front boundary (42') and/or of a rear boundary (44') of the parking space (41) which has been detected by the second detection device (3, 5).

2. Control device according to Claim 1, **characterized in that** the display device (14) is actuated in such a way that the dimensions of the parking space are represented in a bird's eye view.

3. Control device according to one of the preceding claims, **characterized in that** the control device (10) is configured to calculate a distance from a current vehicle position to a target position of the vehicle within the parking space.

4. Control device according to Claim 3, **characterized in that** the control device (10) is configured to bring about a representation of the target position (52) on the display device (14).

5. Control device according to one of the preceding claims,
**characterized by** an interface (50, 51) with a warning device (13, 14) for outputting a warning when a distance from the front and/or rear parking space boundary is undershot.

6. Method for representing a front and/or rear parking space boundary, wherein dimensions of the parking space are detected with a first measuring method when a vehicle drives past the parking space, when dimensions of the parking space are detected in a second measuring method after the vehicle has driven at least partially into the parking space, **characterized in that**
when the front and/or the rear parking space boundary are/is detected the front and/or the rear parking space boundary is/are represented only by the first measuring method in contrast with the case in which the front and/or the rear parking space boundary is/are detected by the second measuring method.

7. Method according to Claim 6, **characterized in that** the front and/or the rear parking space boundaries are represented differently in such a way that lines for representing a parking space boundary differ in their thickness and/or in their colour.

## Revendications

1. Dispositif de commande (10) pour un dispositif d'affichage (14) d'un dispositif d'entrée en stationnement comprenant une interface (19) vers un premier dispositif de détection (11) destiné à détecter un emplacement de stationnement (41) lors d'un passage latéral à côté de l'emplacement de stationnement (41), comprenant une interface (17, 18) vers un deuxième dispositif de détection (3, 5) destiné à détecter une délimitation avant et/ou arrière de l'emplacement de stationnement (41) lors d'une entrée dans l'emplacement de stationnement et comprenant une interface (50) vers le dispositif d'affichage (14) destinée à la représentation des dimensions de l'emplacement de stationnement (41) dans le dispositif d'affichage (14), **caractérisé en ce qu'**une représentation d'une délimitation avant (42) et/ou arrière (44) de l'emplacement de stationnement (41) qui a uniquement été détectée par le premier dispositif de détection (11) se différencie d'une représentation d'une délimitation avant (42') et/ou arrière (44') de l'emplacement de stationnement (41) qui a été détectée par le deuxième dispositif de détection (3, 5).

2. Dispositif de commande selon la revendication 1, **caractérisé en ce que** le dispositif d'affichage (14) est commandé de telle sorte que les dimensions de l'emplacement de stationnement sont représentées dans une perspective à vol d'oiseau.

3. Dispositif de commande selon l'une des revendications précédentes, **caractérisé en ce que** le dispositif de commande (10) est conçu pour le calcul d'une trajectoire depuis une position actuelle du véhicule jusqu'à une position cible du véhicule à l'intérieur de l'emplacement de stationnement.

4. Dispositif de commande selon la revendication 3, **caractérisé en ce que** le dispositif de commande (10) est conçu pour faire représenter dans le dispositif d'affichage (14) une représentation de la position cible (52).

5. Dispositif de commande selon l'une des revendications précédentes, **caractérisé par** une interface (50, 51) vers un dispositif d'alerte (13, 14) destiné à délivrer un avertissement si l'on passe audessous d'un écart par rapport à la délimitation avant et/ou arrière de l'emplacement de stationnement devient trop faible.

6. Procédé de représentation de la délimitation avant et/ou arrière d'un emplacement de stationnement, les dimensions de l'emplacement de stationnement étant détectées avec un premier procédé de mesure lors d'un passage d'un véhicule à côté de l'emplacement de stationnement, les dimensions de l'emplacement de stationnement étant détectées dans un deuxième procédé de mesure après une entrée au moins partielle du véhicule dans l'emplacement de stationnement, **caractérisé en ce que** la délimitation avant et/ou arrière de l'emplacement de stationnement, lors d'une détection de la délimitation avant ou arrière de l'emplacement de stationnement seulement par le premier procédé de mesure, sont représentées différemment par rapport au cas dans lequel la délimitation avant ou arrière de l'emplacement de stationnement est détectée par le deuxième procédé de mesure.

7. Procédé selon la revendication 6, **caractérisé en ce que** la/les délimitation(s) avant et/ou arrière de l'emplacement de stationnement sont représentées différemment **en ce que** les lignes destinées à représentée une délimitation de l'emplacement de stationnement se différencient respectivement au niveau de leur épaisseur et/ou de leur couleur.
